(19) Europäisches Patentamt
European Patent Office
Office européen des brevets

(11) **EP 4 586 131 A1**

(12) **EUROPEAN PATENT APPLICATION**
published in accordance with Art. 153(4) EPC

(43) Date of publication:
**16.07.2025  Bulletin 2025/29**

(21) Application number: **23902123.1**

(22) Date of filing: **26.07.2023**

(51) International Patent Classification (IPC):
**G06F 40/295** (2020.01)    **G06F 40/30** (2020.01)

(52) Cooperative Patent Classification (CPC):
**G06F 16/35; G06F 40/295; G06F 40/30**

(86) International application number:
**PCT/CN2023/109425**

(87) International publication number:
**WO 2024/124913 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.12.2022  CN 202211622292**

(71) Applicants:
- **ZHEJIANG ZEEKR INTELLIGENT TECHNOLOGY CO., LTD.**
  **Ningbo, Zhejiang 315899 (CN)**
- **Zhejiang Geely Holding Group Co., Ltd.**
  **Hangzhou, Zhejiang 310051 (CN)**

(72) Inventor: **LI, Yuan**
**Ningbo, Zhejiang 315899 (CN)**

(74) Representative: **Studio Torta S.p.A.**
**Via Viotti, 9**
**10121 Torino (IT)**

(54) **ENTITY INFORMATION DETERMINING METHOD AND APPARATUS, AND DEVICE**

(57) The present application provides an entity information determination method and apparatus, and a device. The method includes: acquiring a speech text and extracting a semantic feature of each character in the speech text, where the speech text includes N characters, and N is a positive integer greater than 1; according to the semantic feature of each character, determining a position feature of each character, where the position feature indicates a relative position feature of a corresponding character with respect to other characters in the speech text; according to the semantic feature and the position feature of each character, determining a character score corresponding to each character; and, according to the character score of each character, determining entity information of the speech text. During the process, high-level position feature information of each character in the speech text is extracted, thereby improving the accuracy of entity information recognition.

Acquiring a speech text and extracting a semantic feature of each character in the speech text, where the speech text includes N characters, and N is a positive integer greater than 1.  101

Determining a position feature of each character according to the semantic feature of each character, where the position feature indicates a relative position feature of a corresponding character with respect to other characters in the speech text.  102

Determining a character score corresponding to each character according to the semantic feature and the position feature of each character, where the character score indicates an entity recognition class score of the corresponding character.  103

Determining entity information of the speech text according to the character score of each character.  104

FIG. 1

EP 4 586 131 A1

# Description

The present application claims priority to the Chinese Patent Application No. 202211622292.3, which was filed with the China National Intellectual Property Administration on December 16, 2022 and titled "ENTITY INFORMATION DETERMINATION METHOD AND APPARATUS, AND DEVICE", which is hereby incorporated by reference in its entirety.

## TECHNICAL FIELD

The present application relates to the field of intelligent vehicles, and in particular to an entity information determination method and apparatus, and a device.

## BACKGROUND

Natural language understanding of an in-vehicle voice system includes a recognition stage of an entity included in the speech text, and its recognition effect determines whether an in-vehicle function can be successfully executed. Therefore, it is essential to improve the accuracy of entity recognition of the in-vehicle voice system.

In the prior art, entity information recognition is usually performed by extracting semantic feature information of characters and performing feature information association.

However, in the prior art, the recognition accuracy of non-continuous named entities is low in complex scenarios.

## SUMMARY

The present application provides an entity information determination method and apparatus, and a device, so as to solve the problem of low recognition accuracy of non-continuous named entities.

In a first aspect, the present application provides an entity information determination method, including:

acquiring a speech text and extracting a semantic feature of each character in the speech text, where the speech text includes N characters, and N is a positive integer greater than 1;

determining a position feature of each character according to the semantic feature of each character, where the position feature indicates a relative position feature of a corresponding character with respect to other characters in the speech text;

determining a character score corresponding to each character according to the semantic feature and the position feature of each character, where the character score indicates an entity recognition class score of the corresponding character; and

determining entity information of the speech text according to the character score of each character.

In an optional implementation, the determining the position feature of each character according to the semantic feature of each character includes:

performing feature mapping on the semantic feature of each character according to a preset first weight matrix to determine position feature information of each character, where the first weight matrix is used to characterize a correlation between the semantic feature and the character position feature of each character.

In an optional implementation, the determining the character score of each character according to the semantic feature and the position feature of each character includes:

determining a final feature of each character according to the semantic feature and the position feature of each character;

determining the character score of each character according to the final feature of each character.

In an optional implementation, the determining the final feature of each character according to the semantic feature and the position feature of each character includes:

determining a feature proportion of the position feature of each character to the final feature of the corresponding character according to a preset second weight matrix, where the second weight matrix is used to characterize position importance of the corresponding character in the speech text;

determining the final feature of each character according to the feature proportion, the position feature and the semantic feature of each character.

In an optional implementation, the determining the character score of each character according to the final feature of each character includes:

performing matrix transformation processing on the final feature of each character to determine the character score of each character in each entity classification.

In an optional implementation, the determining the entity information of the speech text according to the character score of each character includes:

determining that the entity information of the speech text includes an entity classification corresponding to a character score if the character score is greater than a preset threshold;

determining that the entity information of the speech text does not include an entity classification corresponding to a character score if the character score is less than or equal to the preset threshold.

In a second aspect, the present application provides an entity information determination apparatus, including:

a first processing unit, configured to acquire a speech text and extract a semantic feature of each character in the speech text, where the speech text includes N characters, and N is a positive integer greater than 1;

a first determining unit, configured to determine a position feature of each character according to the semantic feature of each character, where the position feature indicates a relative position feature of a corresponding character with respect to other characters in the speech text;

a second determining unit, configured to determine a character score corresponding to each character according to the semantic feature and the position feature of each character, where the character score indicates an entity recognition class score of the corresponding character; and

a second processing unit, configured to determine entity information of the speech text according to the character score of each character.

In a third aspect, the present application provides an electronic device, including a memory and a processor;

where the memory is configured to store a computer program;

the processor is configured to read the computer program stored in the memory, and execute the entity information determination method as described in the first aspect according to the computer program in the memory.

In a fourth aspect, the present application provides a computer-readable storage medium, where the computer-readable storage medium stores computer-executable instructions. When a processor executes the computer-executable instructions, the entity information determination method as described in the first aspect is implemented.

In a fifth aspect, the present application provides a computer program product, including a computer program, and when the computer program is executed by a processor, the entity information determination method as described in the first aspect is implemented.

The entity information determination method and apparatus, and the device provided by the present application are implemented through the following steps: acquiring a speech text and extracting a semantic feature of each character in the speech text, where the speech text includes N characters, and N is a positive integer greater than 1; determining a position feature of each character according to the semantic feature of each character, where the position feature indicates a relative position feature of a corresponding character with respect to other characters in the speech text; determining a character score corresponding to each character according to the semantic feature and the position feature of each character; and determining entity information of the speech text according to the character score of each character. In this process, high-level position feature information of each character in the speech text is extracted, thereby improving the accuracy of entity information recognition.

## BRIEF DESCRIPTION OF DRAWINGS

The accompanying drawings, which are incorporated in and constitute a part of this specification, illustrate embodiments consistent with the present application and, together with the description, serve to explain the principles of the present application.

FIG. 1 is a flow chart of an entity information determination method provided by an embodiment of the present application.
FIG. 2 is a flow chart of another entity information determination method provided by an embodiment of the present application.
FIG. 3 is a schematic structural diagram of an entity information determination apparatus provided by an embodiment of the present application.
FIG. 4 is a schematic structural diagram of an electronic device provided by an embodiment of the present application.
FIG. 5 is a block diagram of an electronic device provided by an embodiment of the present application.

The above accompanying drawings have clearly illustrated embodiments of the present application, which will be described in more detail later. The accompanying drawings and text descriptions are not intended to limit the scope of the present application in any way, but to illustrate the concept of the present application to those skilled in the art by referring to specific embodiments.

## DESCRIPTION OF EMBODIMENTS

Exemplary embodiments will be described in detail herein, examples of which are shown in the accompanying drawings. When the following description refers to the accompanying drawings, unless otherwise indicated, the same numerals in different accompanying drawings represent the same or similar elements. The embodiments described in the following exemplary embodiments do not represent all embodiments consistent with the present application. Instead, they are merely examples of apparatuses and methods consistent with some aspects of the present application as detailed in the appended claims.

The natural language understanding of an in-vehicle voice system includes a recognition stage of an entity included in the speech text, and the recognition effect thereof determines whether an in-vehicle function can be successfully executed. Therefore, it is essential to improve the accuracy of entity recognition of the in-vehicle voice system.

In an example, the semantic feature information of the characters in a speech text is extracted through a pre-trained language representation model (Bidirectional Encoder Representation from Transformers, abbreviated as BERT), and then association of the feature information between the characters is performed through conditional random field: natural language processing (Conditional Random Field, abbreviated as CRF), thereby realizing the recognition and determination of entity information in the speech text.

However, existing entity recognition and determination methods have a relatively low recognition accuracy in complex scenarios where the named entities contained in the speech text are discrete and discontinuous.

The entity information determination method provided in the present application is intended to solve the above technical problems in the prior art.

The technical solution of the present application and how the technical solution of the present application solves the above-mentioned technical problems are described in detail below with reference to specific embodiments. The following specific embodiments can be combined with each other, and the same or similar concepts or processes may not be repeated in some embodiments. The embodiments of the present application will be described below with reference to the accompanying drawings.

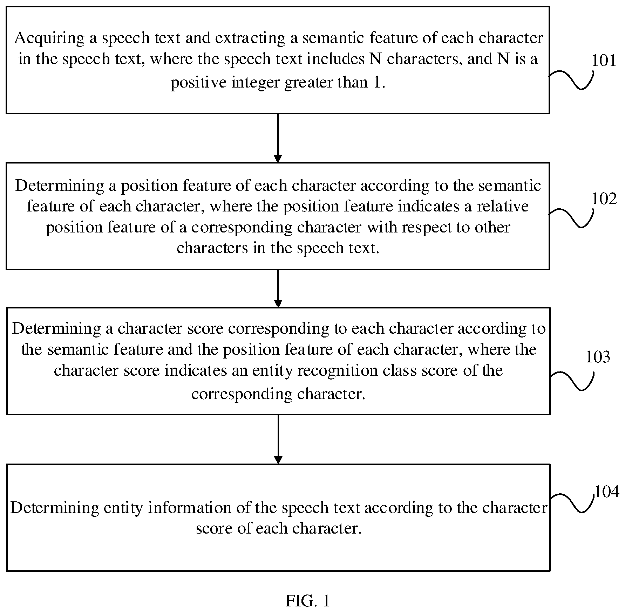

FIG. 1 is a flow chart of an entity information determination method provided by an embodiment of the present application. As shown in FIG. 1, the method includes:

101, acquiring a speech text and extracting a semantic feature of each character in the speech text, where the speech text includes N characters, and N is a positive integer greater than 1.

Exemplarily, a speech text, such as an in-vehicle speech text, is acquired, and the in-vehicle speech text is subjected to semantic feature information extraction through the pre-trained model BERT to output the semantic feature of each character in the speech text. For example, the feature of the i-th text character in the speech text is output as a feature vector $h_i$, and then a speech feature of the entire speech text can be represented as a feature vector sequence h, where the speech text includes N characters, and N is a positive integer greater than 1.

102, determining a position feature of each character according to the semantic feature of each character, where the position feature indicates a relative position feature of a corresponding character with respect to other characters in the speech text.

Exemplarily, based on a feature extraction network, such as a capsule layer in a capsule network, spatial relationship encoding is performed for the feature vector of each character, a correlation between a low-level feature and a high-level feature of each character, i.e., a correlation between the semantic feature and the position feature, is mapped, and the position feature of each character is determined, where the position feature indicates the relative position feature of the corresponding character with respect to other characters in the speech text.

103, determining a character score corresponding to each character according to the semantic feature and the position feature of each character, where the character score indicates an entity recognition class score of the corresponding character.

Exemplarily, the importance levels of different characters in a speech text are different. For example, a complete speech text may include intent keyword characters that a user needs to express, as well as modal particles, adjectives and other characters that are used to assist in expressing the user's intent. Position feature importance enhancement can be performed on different characters according to the importance levels of different characters, and then entity information recognition can be performed according to the features of the characters enhanced with the position importance, so that the character score corresponding to each character can be calculated and determined.

104, determining entity information of the speech text according to the character score of each character.

Exemplarily, each character has corresponding character scores for different classes of entities, and the character scores of the characters can be calculated and analyzed in an integrated way. For example, it can be determined for each character which character score indicates that the corresponding entity information can be ignored or which character score indicates that the corresponding entity information cannot be ignored, and then the entity information contained in the speech text can be summarized and determined.

To sum up, the entity information determination method provided in the present embodiment is implemented by the following steps: acquiring a speech text and extracting a semantic feature of each character in the speech text, where the speech text includes N characters, and N is a positive integer greater than 1; determining a position feature of each character according to the semantic feature of each character, where the position feature indicates a relative position feature of a corresponding character with respect to other characters in the speech text; determining a character score corresponding to each character according to the semantic feature and the position feature of each character; and determining entity information of the speech text according to the character score of each character. In this process, high-level position feature information of each character in the speech text is extracted, thereby improving the accuracy of entity information recognition.

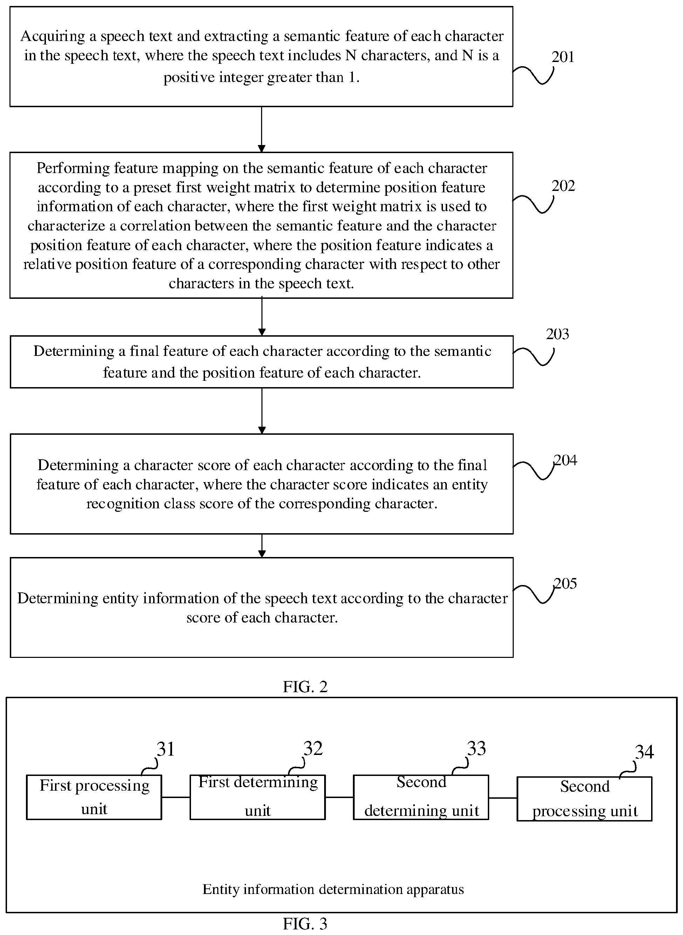

FIG. 2 is a flow chart of another entity information determination method provided by an embodiment of the present application. As shown in FIG. 2, the method includes:

201, acquiring a speech text and extracting a semantic feature of each character in the speech text, where the speech text includes N characters, and N is a positive integer greater than 1.

Exemplarily, this step refers to step 101 and will not be described in detail.

202, performing feature mapping on the semantic feature of each character according to a preset first weight matrix to determine position feature information of each character, where the first weight matrix is used to characterize a correlation between the semantic feature and the character position feature of each character, where the position feature indicates a relative position feature of a corresponding character with respect to other characters in the speech text.

Exemplarily, based on a capsule layer in a capsule network, spatial relationship encoding is performed for a feature vector of each character; and a trainable position weight matrix, i.e., a preset first weight matrix, is used to map a correlation between a low-level feature and a high-level feature of each character, i.e., a correlation between the semantic feature and the position feature, so as to determine the position feature of each character, where the position feature indicates the relative position feature of the corresponding character with respect to other characters in the speech text, and the trainable position weight matrix indicates the position information between respective characters.

In an example, the mapping between the low-level feature and the high-level feature can be expressed as follows:

$$S_{j|i} = W_{ij} h_i$$

where $W_{ij}$ represents the trainable position weight matrix, $h_i$ represents the semantic feature vector of character i, and $S_{j|i}$ represents the position feature information of character i.

203, determining a final feature of each character according to the semantic feature and the position feature of each character.

Exemplarily, feature proportions of the semantic feature and the position feature of the character are determined, and then the final feature of each character is determined in an integrated way.

In an example, step 203 includes the following steps:

determining a feature proportion of the position feature of each character to the final feature of the corresponding character according to a preset second weight matrix, where the second weight matrix is used to characterize position importance of the corresponding character in the speech text;

determining the final feature of each character according to the feature proportion, the position feature and the semantic feature of each character.

Exemplarily, according to the preset second weight matrix, i.e., a connection weight matrix, the feature proportion of the position feature of each character to the final feature of the corresponding character is determined, where the second weight matrix is used to characterize the position importance of the corresponding character in the speech text, including a connection weight of each character relative to other characters in the speech text; the final feature of each character is determined according to the feature proportion, the position feature and the semantic feature of each character.

In an example, the preset second weight matrix can be trained and adjusted, and each capsule vector output $U_i$ can be calculated through dynamic routing in a capsule network for training and adjustment. The calculation formula is as follows:

$$U_i = \sum_{1}^{n} C_i S_{j|i}$$

where n represents the number of characters, $C_i$ represents the connection weight of character i relative to other characters in the speech text, and $S_{j|i}$ represents the position feature information of character i.

A capsule output $V_i$ is obtained from $U_i$ through a squash nonlinear transformation function, and the weight $C_i$ is dynamically adjusted according to the capsule output $V_i$, where the greater the importance of the character to the text, the greater the weight $C_i$.

In an example, after obtaining the position importance weight $C_i$ of each character, weight multiplication can be performed, incorporating the relative position information and the importance of each character:

$$L_i = C_i S_i$$

where, $L_i$ is the final feature vector of character i.

204, determining a character score of each character according to the final feature of each character, where the character score indicates an entity recognition class score of the corresponding character.

In an example, step 204 includes: performing matrix transformation processing on the final feature of each character to determine the character score of each character in each entity classification.

Exemplarily, the matrix transformation processing is performed on the final feature of each character, for example, Multi-head matrix calculation is performed on the final feature of each character to determine the character score of each character, such as a score of the first category class and a score of the second non-category class.

In an example, the entity recognition class score of the character i in the t-th entity class is obtained through Multi-head matrix calculation. For the entity class t, calculation (i.e., two-dimensional matrix calculation) is performed iteratively on the feature vector of the character i and the feature vectors of other characters j in the speech text, to obtain the entity recognition class score of the character i in the t-th entity class, as shown in the following formula:

$$f(L_i, L_j, t) = W_t L_{ij} + b_t$$

where $L_{ij} = \tanh(W_L[L_i, L_j]) + b_h$, $W_t$ is a weight parameter corresponding to the entity class t;

$W_L$ represents a weight vector of a concatenated vector of the feature vector i and the feature vector j, $b_h$ is a bias for calculating $L_{ij}$; $L_{ij}$ represents a weight vector of $L_{ij}$, and $b_t$ is a bias for calculating the class score.

205, determining entity information of the speech text according to the character score of each character.

In an example, step 205 includes the following steps:

determining that the entity information of the speech text includes an entity classification corresponding to a character score if the character score is greater than a preset threshold;

determining that the entity information of the speech text does not include an entity classification corresponding to a character score if the character score is less than or equal to the preset threshold.

Exemplarily, integrated calculation and analysis can be performed on the character scores of the characters. For example, if a character score is greater than the preset threshold, it is determined that the entity information of the speech text includes the entity classification corresponding to the character score; if a character score is less than or equal to the preset threshold, it is determined that the entity information of the speech text does not include the entity classification corresponding to the character score. Thus, non-continuous entity information in the speech text is extracted and determined according to the entity score of each character in the speech text.

To sum up, in the entity information determination method provided in the present embodiment, the semantic feature and the relative position feature of each character are extracted, and enhanced with the position importance, and then the corresponding character score is calculated through the Multi-head matrix. Then, according to the character scores of respective characters, the entity information of the speech text is determined, thereby improving the accuracy of entity information recognition.

FIG. 3 is a schematic structural diagram of an entity information determination apparatus provided by an embodiment of the present application. As shown in FIG. 3, the apparatus includes:

a first processing unit 31, configured to acquire a speech text and extract a semantic feature of each character in the speech text, where the speech text includes N characters, and N is a positive integer greater than 1;

a first determining unit 32, configured to determine a position feature of each character according to the semantic feature of each character, where the position feature indicates a relative position feature of a corresponding character with respect to other characters in the speech text;

a second determining unit 33, configured to determine a character score corresponding to each character according to the semantic feature and the position feature of each character, where the character score indicates an entity recognition class score of the corresponding character; and

a second processing unit 34, configured to determine entity information of the speech text according to the character score of each character.

In an example, the first determining unit 32 is specifically configured to:
perform feature mapping on the semantic feature of each character according to a preset first weight matrix to determine position feature information of each character, where the first weight matrix is used to characterize a correlation between the semantic feature and the character position feature of each character.

In an example, the second determining unit 33 includes:

a first determining subunit, configured to determine a final feature of each character according to the semantic feature and the position feature of each character;

a second determining subunit, configured to determine the character score of each character according to the final feature of each character.

In an example, the second determining subunit includes:

a first processing module, configured to determine a feature proportion of the position feature of each character to the final feature of the corresponding character according to a preset second weight matrix, where the second weight matrix is used to characterize position importance of the corresponding character in the speech text;

a second processing module, configured to determine the final feature of each character according to the feature proportion, the position feature and the semantic feature of each character.

In an example, the second determining subunit is specifically configured to:
perform matrix transformation processing on the final feature of each character to determine the character score of each character in each entity classification.

In an example, the second processing unit 34 includes:

a first processing subunit, configured to determine that the entity information of the speech text includes an entity classification corresponding to a character score if the character score is greater than a preset threshold;

a second processing subunit, configured to determine that the entity information of the speech text does not include an entity classification corresponding to a character score if the character score is less than or equal to the preset threshold.

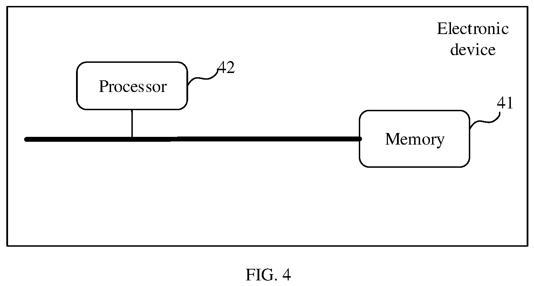

FIG. 4 is a schematic structural diagram of an electronic device provided by an embodiment of the present application. As shown in FIG. 4, the electronic device includes: a memory 41 and a processor 42;

where the memory is configured to store a computer program;

the processor is configured to read the computer program stored in the memory, and execute the method of any of the above embodiments according to the computer program in the memory.

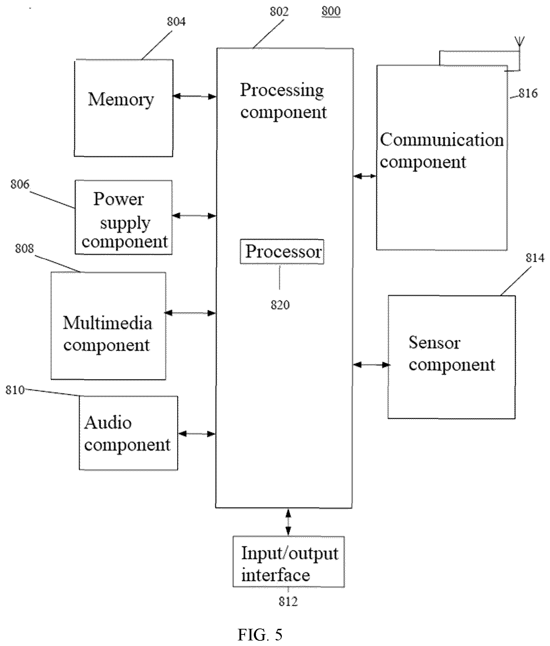

FIG. 5 is a block diagram of an electronic device provided by an embodiment of the present application. The device may be a mobile phone, a computer, a digital broadcast terminal, a message transceiver, a game console, a tablet device, a medical device, a fitness device, a personal digital assistant, etc.

The apparatus 800 may include one or more of the following assemblies: a processing component 802, a memory 804, a power supply component 806, a multimedia component 808, an audio component 810, an input/output (I/O) interface 812, a sensor component 814, and a communication component 816.

The processing component 802 generally controls an overall operation of the apparatus 800, such as operations associated with display, phone calls, data communications, camera operations, and recording operations. The processing component 802 may include one or more processors 820 to execute instructions to complete all or part of the steps of the above-mentioned method. In addition, the processing component 802 may include one or more modules to facilitate the interaction between the processing component 802 and other components. For example, the processing component 802 may include a multimedia module to facilitate the interaction between the multimedia component 808 and the processing component 802.

The memory 804 is configured to store various types of data to support operations of the apparatus 800. Examples of such data include instructions of any application program or method implemented on the device 800, contact data, phonebook data, messages, pictures, videos, etc. The memory 804 can be implemented as any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power supply component 806 provides power to the various components of the apparatus 800. The power supply component 806 may include a power management system, one or more power supplies, and other components associated with generating, managing, and distributing power for the device 800.

The multimedia component 808 includes a screen that provides an output interface between the apparatus 800 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense the boundaries of the touch or swipe actions, but also detect the duration and pressure associated with the touch or swipe operations. In some embodiments, the multimedia component 808 includes a front camera and/or a rear camera. When the apparatus 800 is in an operation mode, such as a shooting mode or a video mode, the front camera and/or the rear camera may receive external multimedia data. Each front camera and rear camera may be a fixed optical lens system or have a focal length and optical zoom capability.

The audio component 810 is configured to output and/or input audio signals. For example, the audio component 810 includes a microphone (MIC), and when the apparatus 800 is in an operation mode, such as a call mode, a recording mode, and a speech recognition mode, the microphone is configured to receive an external audio signal. The received audio signal can be further stored in the memory 804 or sent via the communication component 816. In some embodiments, the audio component 810 also includes a speaker for outputting audio signals.

The I/O interface 812 provides an interface between the processing component 802 and a peripheral interface module, such as a keyboard, a click wheel, a button, etc. These buttons may include but are not limited to: a home button, a volume button, a start button, and a lock button.

The sensor component 814 includes one or more sensors for providing various aspects of status assessment for the device 800. For example, the sensor component 814 can detect an on/off state of the device 800 and a relative positioning of components. For example, the components may be a display and a keypad of the apparatus 800. The sensor component 814 can also detect a position change of the apparatus 800 or a component of the apparatus 800, whether a user contacts the device 800 or not, an orientation or acceleration/deceleration of the device 800, and a temperature change of the apparatus 800. The sensor component 814 can include a proximity sensor configured to detect a presence of nearby objects without any physical contact. The sensor component 814 can also include an optical sensor, such as a CMOS or CCD image sensor, for use in imaging applications. In some embodiments, the sensor component 814 can also include an accelerometer, a gyroscope sensor, a magnetic sensor, a pressure sensor or a temperature sensor.

The communication component 816 is configured to facilitate wired or wireless communication between the apparatus 800 and other devices. The apparatus 800 can access a wireless network based on a communication standard, such as WiFi, 2G or 3G, or a combination thereof. In an exemplary embodiment, the communication component 816 receives a broadcast signal or broadcast-related information from an external broadcast management system via a broadcast channel. In an exemplary embodiment, the communication component 816 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the apparatus 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the above method.

In an exemplary embodiment, a non-transitory computer-readable storage medium including instructions is also provided, such as a memory 804 including instructions, and the instructions can be executed by the processor 820 of the apparatus 800 to perform the above method. For example, the non-transitory computer-readable storage medium can be a ROM, a random access memory (RAM), a CD-ROM, a magnetic tape, a floppy disk, an optical data storage device, etc.

An embodiment of the present application also provides a non-transitory computer-readable storage medium. When instructions in this storage medium are executed by a processor of an electronic device, the electronic device is enabled to execute the method provided in the above embodiments.

An embodiment of the present application also provides a computer program product, which includes a computer program. The computer program is stored in a readable storage medium, and at least one processor of an electronic device can read the computer program from the readable storage medium and execute the computer program to cause the electronic device to execute the solution provided by any of the above embodiments.

Those skilled in the art will easily think of other implementations of the present application after considering the specification and practicing the invention disclosed herein. The present application is intended to cover any variants, use, or adaptive changes of the present application, which follows the general principles of the present application and includes the common knowledge or conventional techniques in the art that are not disclosed in the present application. The specification and embodiments are intended to be exemplary only, and the true scope and spirit of the present application are indicated by the following claims.

It should be understood that the present application is not limited to the precise structures that have been described above and shown in the drawings, and that various modifications and changes may be made without departing from the scope thereof. The scope of the present application is defined only by the appended claims.

## Claims

1. An entity information determination method, comprising:

acquiring a speech text and extracting a semantic feature of each character in the speech text, wherein the speech text comprises N characters, and N is a positive integer greater than 1;
determining a position feature of each character according to the semantic feature of each character, wherein the position feature indicates a relative position feature of a corresponding character with respect to other characters in the speech text;
determining a character score corresponding to each character according to the semantic feature and the position feature of each character, wherein the character score indicates an entity recognition class score of the corresponding character;
determining entity information of the speech text according to the character score of each character.

2. The method according to claim 1, wherein the determining the position feature of each character according to the semantic feature of each character comprises:
performing feature mapping on the semantic feature of each character according to a preset first weight matrix to determine position feature information of each character, wherein the first weight matrix is used to characterize a correlation between the semantic feature and the character position feature of each character.

3. The method according to claim 1, wherein the determining the character score corresponding to each character according to the semantic feature and the position feature of each character comprises:

determining a final feature of each character according to the semantic feature and the position feature of each character;
determining the character score of each character according to the final feature of each character.

4. The method according to claim 3, wherein the determining the final feature of each character according to the semantic feature and the position feature of each character comprises:

determining a feature proportion of the position feature of each character to the final feature of the corresponding character according to a preset second weight matrix, wherein the second weight matrix is used to characterize position importance of the corresponding character in the speech text;
determining the final feature of each character according to the feature proportion, the position feature and the semantic feature of each character.

5. The method according to claim 3, wherein the determining the character score of each character according to the final feature of each character comprises:
performing matrix transformation processing on the final feature of each character to determine the character score of each character in each entity classification.

6. The method according to claim 5, wherein the determining the entity information of the speech text according to the character score of each character comprises:

determining that the entity information of the speech text comprises an entity classification corresponding to a character score if the character score is greater than a preset threshold;
determining that the entity information of the speech text does not comprise an entity classification corresponding to a character score if the character score is less than or equal to the preset threshold.

7. An entity information determination apparatus, comprising:

a first processing unit, configured to acquire a speech text and extract a semantic feature of each character in the speech text, wherein the speech text comprises N characters, and N is a positive integer greater than 1;
a first determining unit, configured to determine a position feature of each character according to the semantic feature of each character, wherein the position feature indicates a relative position feature of a corresponding character with respect to other characters in the speech text;
a second determining unit, configured to determine a character score corresponding to each character according to the semantic feature and the position feature of each character, wherein the character score indicates an entity recognition class score of the corresponding character; and
a second processing unit, configured to determine entity information of the speech text according to the character score of each character.

8. An electronic device, comprising a memory and a processor; wherein

the memory is configured to store a computer program; and
the processor is configured to read the computer program stored in the memory, and execute the entity information determination method according to any one of claims 1 to 6 according to the computer program in the memory.

9. A computer-readable storage medium, wherein the computer-readable storage medium stores computer-executable instructions, and, when a processor executes the computer-executable instructions, the entity information determination method according to any one of claims 1 to 6 is implemented.

10. A computer program product, comprising a computer program, wherein, when the computer program is executed by a processor, the entity information determination method according to any one of claims 1 to 6 is executed.

Acquiring a speech text and extracting a semantic feature of each character in the speech text, where the speech text includes N characters, and N is a positive integer greater than 1.

101

Determining a position feature of each character according to the semantic feature of each character, where the position feature indicates a relative position feature of a corresponding character with respect to other characters in the speech text.

102

Determining a character score corresponding to each character according to the semantic feature and the position feature of each character, where the character score indicates an entity recognition class score of the corresponding character.

103

Determining entity information of the speech text according to the character score of each character.

104

FIG. 1

Acquiring a speech text and extracting a semantic feature of each character in the speech text, where the speech text includes N characters, and N is a positive integer greater than 1.　201

Performing feature mapping on the semantic feature of each character according to a preset first weight matrix to determine position feature information of each character, where the first weight matrix is used to characterize a correlation between the semantic feature and the character position feature of each character, where the position feature indicates a relative position feature of a corresponding character with respect to other characters in the speech text.　202

Determining a final feature of each character according to the semantic feature and the position feature of each character.　203

Determining a character score of each character according to the final feature of each character, where the character score indicates an entity recognition class score of the corresponding character.　204

Determining entity information of the speech text according to the character score of each character.　205

FIG. 2

31　32　33　34

| First processing unit | First determining unit | Second determining unit | Second processing unit |

Entity information determination apparatus

FIG. 3

Electronic
device

Processor   42

41
Memory

FIG. 4

FIG. 5

## INTERNATIONAL SEARCH REPORT

| International application No. |
|---|
| **PCT/CN2023/109425** |

### A. CLASSIFICATION OF SUBJECT MATTER

G06F40/295(2020.01)i; G06F40/30(2020.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 信息, 语音, 语义, 向量, 位置, 文字, 分数, information, voice, semantic, vector quantity, location, characters, score

### C. DOCUMENTS CONSIDERED TO BE RELEVANT

| Category* | Citation of document, with indication, where appropriate, of the relevant passages | Relevant to claim No. |
|---|---|---|
| X | CN 115099242 A (JIANGXI TELECOM INFORMATION INDUSTRY CO., LTD.) 23 September 2022 (2022-09-23) <br> description, paragraphs [0021]-[0062] | 1-10 |
| A | CN 112287100 A (ALIBABA GROUP HOLDING LIMITED) 29 January 2021 (2021-01-29) <br> entire document | 1-10 |
| A | CN 112466288 A (BEIJING BAIDU NETCOM SCIENCE AND TECHNOLOGY CO., LTD.) 09 March 2021 (2021-03-09) <br> entire document | 1-10 |
| A | CN 113284499 A (HUBEI ECARX TECHNOLOGY CO., LTD.) 20 August 2021 (2021-08-20) <br> entire document | 1-10 |
| A | US 2019347298 A1 (THE REGENTS OF THE UNIVERSITY OF CALIFORNIA) 14 November 2019 (2019-11-14) <br> entire document | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 October 2023** | **24 October 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/109425** |

### C.    DOCUMENTS CONSIDERED TO BE RELEVANT

| Category* | Citation of document, with indication, where appropriate, of the relevant passages | Relevant to claim No. |
|---|---|---|
| PX | CN 115906853 A (ZHEJIANG JIKRYPTON INTELLIGENT TECHNOLOGY CO., LTD. et al.) 04 April 2023 (2023-04-04) entire document | 1-10 |

Form PCT/ISA/210 (second sheet) (July 2022)

| | | | | International application No.<br>**PCT/CN2023/109425** |
|---|---|---|---|---|

| Patent document<br>cited in search report | | | Publication date<br>(day/month/year) | Patent family member(s) | | | Publication date<br>(day/month/year) |
|---|---|---|---|---|---|---|---|
| CN | 115099242 | A | 23 September 2022 | CN | 115099242 | B | 15 November 2022 |
| CN | 112287100 | A | 29 January 2021 | None | | | |
| CN | 112466288 | A | 09 March 2021 | CN | 112466288 | B | 31 May 2022 |
| CN | 113284499 | A | 20 August 2021 | None | | | |
| US | 2019347298 | A1 | 14 November 2019 | US | 11086937 | B2 | 10 August 2021 |
| CN | 115906853 | A | 04 April 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211622292